(19) Europäisches Patentamt
European Patent Office
Office européen des brevets

(11) **EP 2 550 507 B1**

(12) **EUROPÄISCHE PATENTSCHRIFT**

(45) Veröffentlichungstag und Bekanntmachung des Hinweises auf die Patenterteilung:
**20.05.2015 Patentblatt 2015/21**

(51) Int Cl.:
*G01D 5/14* (2006.01)   *H02P 23/14* (2006.01)
*H02P 6/18* (2006.01)   *G01B 7/14* (2006.01)

(21) Anmeldenummer: **11708492.1**

(22) Anmeldetag: **17.03.2011**

(86) Internationale Anmeldenummer:
**PCT/EP2011/054043**

(87) Internationale Veröffentlichungsnummer:
**WO 2011/117135 (29.09.2011 Gazette 2011/39)**

(54) **VERFAHREN UND VORRICHTUNG ZUR ERMITTLUNG EINER AKTUELLEN WINKELPOSITION EINES DREHBAREN MAGNETISCHEN BAUTEILS IN EINEM ELEKTRISCHEN ANTRIEB**

METHOD AND DEVICE FOR DETERMINING THE ACTUAL ANGLE POSITION OF A ROTATABLE MAGNETIC COMPONENT IN AN ELECTRIC DRIVE

PROCÉDÉ ET DISPOSITIF DE DÉTERMINATION DE LA POSITION ANGULAIRE ACTUELLE D'UN ÉLÉMENT MAGNÉTIQUE ROTATIF DANS UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2010 DE 102010003096**

(43) Veröffentlichungstag der Anmeldung:
**30.01.2013 Patentblatt 2013/05**

(73) Patentinhaber: **Robert Bosch GmbH**
**70442 Stuttgart (DE)**

(72) Erfinder: **VOLLMER, Ulrich**
**73266 Bissingen (DE)**

(56) Entgegenhaltungen:
**WO-A1-91/10281      DE-A1-102006 004 166**
**US-A1- 2007 032 970**

**Beschreibung**

Stand der Technik

Die Erfindung geht aus von einem Verfahren zur Ermittlung einer aktuellen Winkelposition eines drehbaren magnetischen Bauteils in einem elektrischen Antrieb nach der Gattung des unabhängigen Patentanspruchs 1 und von einer Vorrichtung zur Ermittlung einer aktuellen Winkelposition eines drehbaren magnetischen Bauteils in einem elektrischen Antrieb nach der Gattung des unabhängigen Patentanspruchs 7.

Drehzahlvariable Antriebe auf Basis von Synchronmaschinen sind Stand der Technik. Um die Synchronmaschine korrekt ansteuern zu können, müssen Informationen über den aktuellen Rotorwinkel vorliegen. Dabei ist der erforderliche Eindeutigkeitsbereich von der Polpaarzahl Zp des Motors abhängig. Der Rotorwinkel muss nur innerhalb eines Bereichs der Größe 360°/Zp eindeutig bekannt sein. Es ist also unerheblich, ob der Winkel x° oder x°+(360°/Zp) beträgt.

Üblicherweise wird der Rotorwinkel mit Hilfe eines Winkelsensors gemessen. Eine bekannte Möglichkeit ist der Einsatz eines Gebermagneten und eines AMR-Winkelsensors, d.h. eines Winkelsensors, der einen anisotropen magnetoresistiven Effekt ausnützt. Damit kann jedoch kein in einem uneingeschränkten Winkelbereich von 0 bis 360° eindeutiger Rotorwinkel gemessen werden, sondern nur ein in einem eingeschränkten Winkelbereich von 0 bis 180° eindeutiger Rotorwinkel. Eine Unterscheidung zwischen einem Rotorwinkel von x° und von x°+180° ist damit nicht möglich. Eine solche Winkelsensorik ist folglich nur für Synchronmaschinen mit einer geraden Polpaarzahl einsetzbar.

Um ein im uneingeschränkten Winkelbereich von 0 bis 360° eindeutiges Winkelsignal zu erhalten, kann der AMR-Winkelsensor mit zwei Hall-Sensoren kombiniert werden. In der Offenlegungsschrift DE 102 48 060 A1 werden beispielsweise eine solche Magnetfeldsensoranordnung für einen Winkelsensor und ein Verfahren zum Betrieb einer derartigen Sensoranordnung beschrieben. Die beschriebene Magnetfeldsensoranordnung umfasst einen Winkelsensor, über den die aktuelle Winkelposition eines drehbaren magnetischen Bauteils in einem vorgegebenen Winkelbereich messbar ist. Dem Winkelsensor sind zumindest zwei Sensorelemente zugeordnet, über welche die aktuelle Magnetfeldrichtung des magnetischen Bauteils messbar ist, wobei die Sensorelemente in der Weise zueinander angeordnet sind, dass ihre die Hauptmessrichtung kennzeichnenden Achsen einen Winkel einschließen. Bei der beschriebenen Magnetfeldsensoranordnung sind jedoch zusätzliche Bauelemente in Form von Sensorelementen erforderlich.

Zudem ist es bekannt, dass der Rotorwinkel durch Messung elektrischer Größen geschätzt werden kann. Dazu können zwei bekannte Effekte ausgenutzt werden. So ist beispielsweise die in den Statorspulen der Synchronmaschine induzierte Spannung vom Rotorwinkel abhängig. Des Weiteren können die Induktivitäten der Statorspulen je nach Bauform der Synchronmaschine vom Rotorwinkel abhängen.

So werden beispielsweise in der Offenlegungsschrift DE 10 2006 004 166 A1 ein Verfahren und eine Schaltungsanordnung zur Schätzung des Rotorwinkels einer Synchronmaschine im Stillstand beschrieben. Entsprechend dem beschriebenen Verfahren werden drei kurze Spannungspulse in verschiedene Richtungen an die Statorwicklungen der Synchronmaschine angelegt. Aus den gemessenen Stromanstiegen wird dann der Rotorwinkel bestimmt.

In der Patentschrift AT 397 727 B wird beispielsweise ein Verfahren und eine Schaltungsanordnung zur sensorlosen Drehwinkelerfassung eines Rotors einer Synchronmaschine beschrieben. Das beschriebene Verfahren bestimmt mittels Spannungspulsen den Rotorwinkel, wobei angenommen wird, dass die Induktivitäten der Statorspulen der Synchronmaschine näherungsweise sinusförmig vom Rotorwinkel abhängen.

Es ist also prinzipiell möglich, ohne Winkelsensor auszukommen und den Rotorwinkel zu schätzen. Diese Winkelschätzmethoden erfordern aber aufwändige Berechnungen, verursachen eine Geräuschentwicklung und weisen eine schlechtere Genauigkeit auf, als wenn eine Winkelsensorik eingesetzt wird.

Aus der DE 10 2006 004 166 A1 ist ein Verfahren zur Bestimmung des Rotorwinkels eines Synchronmaschine im Stillstand bekannt.

In der WO 91/10281 wird ein Verfahren zur Bestimmung der Anfangswinkelposition eines Rotors in einer n-phasigen elektrischen Maschine offenbart, wobei anhand von Testimpulsen nacheinander die Induktivitäten der Statorwicklungen gemessen werden. Eine Umdrehung wird in 2n Zonen unterteilt und aus der Beziehung der gemessenen Induktivitäten untereinander wird der Drehwinkel des Rotors bestimmt.

Aus der US 2007/032970A1 ist ein Verfahren zur Ermittlung einer aktuellen Winkelposition eines drehbaren magnetischen Bauteils in einem elektrischen Antrieb bekannt, der eine ungerade Polzahl aufweist. Hierbei wird ein aktueller Winkelmesswert des drehbaren Bauteils mit einer Winkelsensorik gemessen, welche den aktuellen Winkelmesswert nur innerhalb eines vorgegebenen eingeschränkten Winkelbereichs eindeutig misst. Mit Hilfe von Testimpulsen gemäß vordefinierter Funktionen wird das drehbare Bauteil in oszillatorische Bewegungen im Mikrometerbreich versetzt. Diese Bewegungen werden mit einem Ihkrementalsensor gemessen und anhand eines Algorithmus, welcher das dynamische Modell des Antriebs und die Messungen berücksichtigt, wird die InitialWinkelposition des Bauteils bestimmt.

Offenbarung der Erfindung

Das erfindungsgemäße Verfahren zur Ermittlung einer aktuellen Winkelposition eines drehbaren magnetischen Bauteils in einem elektrischen Antrieb mit den Merkmalen des unabhängigen Patentanspruchs 1 hat demgegenüber den Vorteil, dass ein mit einer Winkelsensorik für einen eingeschränkten Winkelbereich eindeutig gemessener aktueller Winkelmesswert unter Verwendung von Richtung und Vorzeichen des Magnetfelds des drehbaren magnetischen Bauteils in eine eindeutige aktuelle Winkelposition in einem uneingeschränkten Winkelbereich umgerechnet wird. Hierbei werden Richtung und Vorzeichen des Magnetfelds des drehbaren magnetischen Bauteils durch Anlegen von ersten Testimpulsen an den elektrischen Antrieb und durch Auswerten von resultierenden zweiten Testimpulsen ermittelt, welche im elektrischen Antrieb in Reaktion auf die angelegten ersten Testimpulse entstehen.

In vorteilhafter Weise werden resultierende zweite Testimpulse, welche in Reaktion auf erste Testimpulse erzeugt werden, welche an zwei aufeinanderfolgenden Ansteuerungszeitpunkten an die Synchronmaschine angelegt wurden, zur Ermittlung einer bezüglich eines ersten Ansteuerungszeitpunkts resultierenden Länge eines ersten Gesamtstromimpulses und einer bezüglich eines zweiten Ansteuerungszeitpunkts resultierenden Länge eines zweiten Gesamtstromimpulses ausgewertet, wobei der für den eingeschränkten Winkelbereich eindeutig gemessene aktuelle Winkelmesswert unter Verwendung der Länge des ersten Gesamtstromimpulses und der Länge des zweiten Gesamtstromimpulses, aus welchen Richtung und Vorzeichen des Magnetfelds des drehbaren magnetischen Bauteils bestimmt werden, in eine eindeutige aktuelle Winkelposition im uneingeschränkten Winkelbereich umgerechnet wird. Ist die zum ersten Messzeitpunkt ermittelte Länge des resultierenden ersten Gesamtstromimpulses beispielsweise größer oder gleich der zum zweiten Messzeitpunkt ermittelten Länge des resultierenden zweiten Gesamtstromimpulses, dann entspricht die aktuelle Winkelposition dem von der Winkelsensorik gemessenen aktuellen Winkelmesswert. Ist die zum ersten Messzeitpunkt ermittelte Länge des resultierenden ersten Gesamtstromimpulses jedoch kleiner als die zum zweiten Messzeitpunkt ermittelte Länge des resultierenden zweiten Gesamtstromimpulses, dann entspricht die aktuelle Winkelposition nicht dem von der Winkelsensorik gemessenen aktuellen Winkelmesswert. In diesem Fall wird der aktuelle Winkelmesswert um einen bestimmten Korrekturwert ergänzt. Misst die Winkelsensorik den aktuellen Winkelmesswert innerhalb eines vorgegebenen eingeschränkten Winkelbereichs von beispielsweise 0 bis 180° eindeutig, dann wird in diesem Fall ein Korrekturwert von 180° zum gemessenen aktuellen Winkelmesswert addiert, um die aktuelle Winkelposition zu ermitteln.

Die erfindungsgemäße Vorrichtung zur Ermittlung einer aktuellen Winkelposition eines drehbaren magnetischen Bauteils in einem elektrischen Antrieb mit den Merkmalen des unabhängigen Patentanspruchs 7 hat demgegenüber den Vorteil, dass eine Auswerte- und/oder Steuereinheit vorhanden ist, welche über eine Schnittstelleneinheit Informationen über einen innerhalb eines vorgegebenen eingeschränkten Winkelbereichs eindeutig gemessenen aktuellen Winkelmesswert empfängt, wobei die Auswerte- und/oder Steuereinheit den für den eingeschränkten Winkelbereich eindeutig gemessenen aktuellen Winkelmesswert unter Verwendung von Richtung und Vorzeichen des Magnetfelds des drehbaren magnetischen Bauteils in eine eindeutige aktuelle Winkelposition in einem uneingeschränkten Winkelbereich umrechnet. Hierbei ermittelt die Auswerte- und/oder Steuereinheit Richtung und Vorzeichen des Magnetfelds des drehbaren magnetischen Bauteils für eine Initialkonfiguration durch Auswerten von ersten Testimpulsen, welche an den elektrischen Antrieb angelegt sind, und von zweiten Testimpulsen, welche im elektrischen Antrieb in Reaktion auf die angelegten ersten Testimpulse entstehen.

In vorteilhafter Weise wertet die Auswerte- und/oder Steuereinheit resultierende zweite Testimpulse, welche in Reaktion auf erste Testimpulse erzeugbar sind, welche an zwei aufeinanderfolgenden Ansteuerungszeitpunkten an den elektrischen Antrieb angelegt sind, zur Ermittlung einer bezüglich eines ersten Ansteuerungszeitpunkts resultierenden Länge eines ersten Gesamtstromimpulses und einer bezüglich eines zweiten Ansteuerungszeitpunkts resultierenden Länge eines zweiten Gesamtstromimpulses aus, wobei die Auswerte- und/oder Steuereinheit den im eingeschränkten Winkelbereich eindeutig gemessenen aktuellen Winkelmesswert unter Verwendung der Länge des ersten Gesamtstromimpulses und der Länge des zweiten Gesamtstromimpulses, aus welchen Richtung und Vorzeichen des Magnetfelds des drehbaren magnetischen Bauteils bestimmbar sind, in eine eindeutige aktuelle Winkelposition im uneingeschränkten Winkelbereich umrechnet.

Ausführungsformen der vorliegenden Erfindung ermöglichen in vorteilhafter Weise den Einsatz einer Winkelsensorik, welche Winkelmesswerte nur in einem eingeschränkten Winkelbereich von beispielsweise 0 bis 180° eindeutig messen kann, für elektrische Antriebe mit ungerader Polpaarzahl, die vorzugsweise eine Synchronmaschine mit ungerader Polpaarzahl umfassen, ohne zusätzliche Bauelemente, wie beispielsweise Hall-Sensorelemente. Da die von der Winkelsensorik gemessenen Winkelmesswerte unter Verwendung von Richtung und Vorzeichen des Magnetfelds des drehbaren magnetischen Bauteils in eindeutige Winkelpositionen in einem uneingeschränkten Winkelbereich von beispielsweise 0 bis 360° umgerechnet werden, ist in vorteilhafter Weise eine sehr genaue Bestimmung der aktuellen Winkelposition mit der Winkelsensorik, welche den aktuellen Winkelmesswert nur innerhalb eines vorgegebenen eingeschränkten Winkelbereichs eindeutig misst, ohne zusätzliche Bauelemente und ohne aufwändige Berechnungen möglich. Da Richtung und Vorzeichen des Magnetfelds des drehbaren magnetischen Bauteils nur einmal für jede Initialkonfiguration bestimmt werden müssen, und die nachfolgende Berechnung der aktuellen Winkelposition einfach und schnell ausgeführt werden kann, ist der Rechenaufwand bei Ausführungsformen der vorliegenden Erfindung im Vergleich zu den aus dem Stand der Technik bekannten Schätzverfahren, die keine Winkelsensorik verwenden, in vorteilhafter Weise sehr gering. Die Winkelsensorik umfasst beispielsweise einen AMR-Winkelsensor, welcher einen anisotropen magnetoresistiven Effekt ausnützt. Da solche AMR-Winkelsensoren kostengünstig in großen Stückzahlen hergestellt werden, ist eine einfache und kostengünstige Implementierung des erfindungsgemäßen Verfahrens bzw. der erfindungsgemäßen Vorrichtung möglich. Zudem weisen Ausführungsformen der vorliegenden Erfindung durch den Wegfall von zusätzlichen Bauteilen Vorteile bezüglich Bauraum und Kosten im Vergleich zu aus dem Stand der Technik bekannten Magnetfeldsensoranordnungen für eine Winkelsensorik auf. Zum Erzeugen und Messen der Testimpulse können in vorteilhafter Weise ohnehin zur Steuerung der elektrischen Antriebe vorhandene Bauelemente verwendet werden, die als Teil der erfindungsgemäßen Vorrichtung ausgeführt und/oder über entsprechende Schnittstelleneinheiten mit der erfindungsgemäßen Vorrichtung gekoppelt werden können.

Ausführungsformen der Erfindung können mit Hilfe der Winkelsensorik beispielsweise den Winkelmesswert eines Rotors des elektrischen Antriebs im Winkelbereich von 0 bis 180° eindeutig messen. Damit kann die Richtung - aber bei ungerader Polpaarzahl nicht das Vorzeichen - des Rotor-Magnetfeldes, d.h. einer d-Achse des Rotormagnetfelds bestimmt werden. Der Rotor weißt beispielsweise ein Polpaar auf, wobei die Lage des Rotor-Magnetfelds durch rotorfeste magnetischen Achsen vorgegeben wird, die auch als d-Achse bzw. q-Achse bezeichnet werden. Bei der Verwendung von nur einem Polpaar gibt es genau eine d- und eine q-Achse. Bei Rotoren mit mehreren Polpaaren gibt es entsprechend mehrere d- und q-Achsen. Das Rotor-Magnetfeld kann beispielsweise von Permanentmagneten und/oder durch eine Wicklung elektrisch erzeugt werden.

Nun ist es möglich, den Stator des elektrischen Antriebs so zu bestromen, dass ein Stator-Magnetfeld erzeugt wird, das dieselbe Richtung aufweist, wie das Rotor-Magnetfeld. Da der von der Winkelsensorik gemessene aktuelle Winkelmesswert nur auf 180° eindeutig ist, ist zu diesem Zeitpunkt nicht bekannt, ob die Vorzeichen des Rotor- und des Stator-Magnetfelds gleich sind. Es ist also nicht bekannt, ob die beiden Magnetfelder sich addieren oder subtrahieren. Wenn sich die Magnetfelder addieren, dann wird das Gesamtmagnetfeld relativ groß und das weichmagnetische Material (Eisen) des elektrischen Antriebs sättigt relativ stark. Wenn sich die Magnetfelder subtrahieren, dann wird das Gesamtmagnetfeld relativ klein und das Eisen sättigt kaum. Aufgrund der unterschiedlichen Sättigung des Eisens haben die Statorspulen in beiden Fällen unterschiedliche Induktivitäten. Addieren sich die Felder, so ist die Sättigung stärker und damit die Induktivität kleiner und folglich der Stromanstieg steiler. Werden also an die Statorspulen nacheinander ein positiver und ein negativer Spannungspuls in d-Richtung angelegt, dann ist die Anstiegsgeschwindigkeit des Statorstroms bei beiden Spannungspulsen unterschiedlich. Aus der Anstiegsgeschwindigkeit des Stroms kann dann auf die Induktivität und damit auf das Vorzeichen des Rotormagnetfeldes geschlossen werden. Damit wird es möglich zu entscheiden, welches die positive und welches die negative d-Richtung des Rotormagnetfeldes ist. In der Richtung mit stärkerem Stromanstieg ist die Induktivität kleiner, die Magnetfelder addieren sich also. Dies ist die positive d-Richtung, in die ein Nordpol des Rotors zeigt. In der entgegengesetzten Richtung ist die Induktivität größer, die Magnetfelder subtrahieren sich. Dies ist die negative d-Richtung, in die ein Südpol des Rotors zeigt.

Diese Auswertung wird nur einmal bei einer Initialkonfiguration ausgeführt, die einen Stillstand des elektrischen Antriebs repräsentiert. So können Richtung und Vorzeichen des Magnetfelds des drehbaren magnetischen Bauteils beispielsweise bei jedem Systemstart ausgeführt werden, in welches der elektrische Antrieb eingebaut ist, also beispielsweise bei jedem Fahrzeugstart. Um danach stets einen eindeutigen Winkelmesswert zu erhalten wird sichergestellt, dass der zeitliche Abstand zwischen zwei Winkelmessungen so klein ist, dass sich der Winkel auch bei Maximaldrehzahl der Synchronmaschine in dieser Zeit um weniger als 90° ändert. Die Nulllage des Winkelmesswerts der Winkelmesssensorik wird in vorteilhafter Weise so festgelegt, dass der gemessene Winkelmesswert dem Winkel der d-Achse des Rotormagnetfelds entspricht. Der Spannungsbetrag der erzeugten Testimpulse und die Zeitdauer, für welche die als Spannungsimpulse ausgeführten Testimpulse an den elektrischen Antrieb angelegt virerden, werden vorzugsweise so vorgegeben, dass die resultierenden Ströme nicht so hoch sind, dass der elektrische Antrieb und/oder eine zugehörige Elektronik geschädigt werden können, aber hoch genug sind, so dass die Ströme mit der Strommesssensorik des elektrischen Antriebs ausreichend genau gemessen werden können.

Ausführungsformen der vorliegenden Erfindung können in jedem System mit elektrischem Antrieb eingesetzt werden, wenn eine Winkelsensorik, welche einen aktuellen Winkelmesswert nur innerhalb eines vorgegebenen eingeschränkten Winkelbereichs eindeutig misst, und eine Stromsensorik vorhanden sind, und der elektrische Antrieb eine ungerade Anzahl von Polpaaren aufweist.

So ist der Einsatz beispielsweise in einer elektrischen (Servo-)Lenkung, in Elektrowerkzeugen mit Synchronmaschine bzw. bürstenloser Gleichstrommaschine, in einem Hybridantrieb mit einer Kombination aus Verbrennungsmotor und elektrischem Antrieb oder in rein elektrisch angetriebenen Fahrzeugen möglich.

Durch die in den abhängigen Ansprüchen aufgeführten Maßnahmen und Weiterbildungen sind vorteilhafte Verbesserungen des im unabhängigen Patentenspruch 1 angegebenen Verfahrens zur Ermittlung einer aktuellen Winkelposition eines drehbaren magnetischen Bauteils in einem elektrischen Antrieb sowie der im unabhängigen Patentanspruch 7 angegebenen Vorrichtung zur Ermittlung einer aktuellen Winkelposition eines drehbaren magnetischen Bauteils in einem elektrischen Antrieb möglich.

Besonders vorteilhaft ist, dass Richtung und Vorzeichen des Magnetfelds des drehbaren magnetischen Bauteils einmalig für die jeweilige Initialkonfiguration bestimmt werden. Dadurch kann der Rechenaufwand zur Ermittlung einer aktuellen Winkelposition deutlich reduziert werden. Nach der Bestimmung von Richtung und Vorzeichen des Magnetfelds des drehbaren magnetischen Bauteils wird der für den eingeschränkten Winkelbereich eindeutige aktuelle Winkelmesswert zyklisch gemessen, wobei der für die jeweilige Initialkonfiguration im eingeschränkten Winkelbereich eindeutig gemessene aktuelle Winkelmesswert und die daraus berechnete eindeutige aktuelle Wickelposition im uneingeschränkten Winkelbereich nach der Berechnung der aktuellen Winkelposition als alter Winkelmesswert bzw. alte Winkelposition gespeichert werden, wobei die für den uneingeschränkten Winkelbereich eindeutige aktuelle Winkelposition basierend auf der alten Winkelposition und dem alten Winkelmesswert und dem im eingeschränkten Winkelbereich eindeutig gemessenen aktuellen Winkelmesswert berechnet wird, und wobei nach der Berechnung der aktuellen Winkelposition, der gemessene aktuelle Winkelmesswert und die daraus ermittelte aktuelle Winkelposition als alter Winkelimesswert bzw. alte Winkelposition gespeichert werden. Das bedeutet, dass die "alten" gemessenen Winkelmesswerte bzw. berechneten Winkelpositionen bei der zu einem nachfolgenden Zeitpunkt durchgeführten Berechnung der aktuellen Winkelposition wieder verwendet werden, wobei zu späteren Zeitpunkten keine weiter Erzeugung bzw. Auswertung von Testimpulsen zur Berechnung der aktuellen Winkelposition durchgeführt wird. Die aktuelle Winkelposition wird vorzugsweise in einem festen Zeitraster mit äquidistanten Messzeitpunkten gemessen.

In vorteilhafter Ausgestaltung des erfindungsgemäßen Verfahrens werden die ersten Testimpulse in Abhängigkeit von vorgegebenen Informationen erzeugt und zu vorgegebenen Ansteuerungszeitpunkten für eine bestimmte Zeitdauer an den elektrischen Antrieb angelegt, wobei die vorgegebenen Informationen eine bestimmte Zeitdauer und/oder einen bestimmten Spannungsbetrag und/oder eine bestimmte Richtung umfassen. So können die ersten Testimpulse beispielsweise für die bestimmte Zeitdauer als Spannungsimpulse mit dem vorgegebenen Spannungsbetrag und korrespondierenden vorgegebenen Richtungen zu vorgegebenen Ansteuerungszeitpunkten an Statorspulen des elektrischen Antriebs angelegt werden, wobei zu vorgegebenen Messzeitpunkten resultierende zweite Testimpulse als Stromimpulse gemessen und ausgewertet werden, und wobei die vorgegebenen Messzeitpunkte im Wesentlichen gleiche Zeitabstände zu korrespondierenden Ansteuerungszeitpunkten aufweisen.

In vorteilhafter Ausgestaltung der erfindungsgemäßen Vorrichtung erzeugt die Auswerte- und/oder Steuereinheit beispielsweise die ersten Testimpulse in Abhängigkeit von vorgegebenen Informationen als Spannungsimpulse mit dem vorgegebenen Spannungsbetrag und korrespondierenden vorgegebenen Richtungen selbst und legt diese zu vorgegebenen Ansteuerungszeitpunkten für eine bestimmte Zeitdauer über mindestens eine Schnittstelleneinheit direkt an den elektrischen Antrieb an. Alternativ legt die Auswerte- und/oder Steuereinheit vorgegebene Informationen zur Erzeugung der ersten Testimpulse über mindestens eine Schnittstelle an einen Spannungsgenerator an, welcher die ersten Testimpulse in Reaktion auf die vorgegebenen Informationen erzeugt und zu den vorgegebenen Ansteuerungszeitpunkten für die bestimmte Zeitdauer an den elektrischen Antrieb anlegt.

In weiterer vorteilhafter Ausgestaltung der erfindungsgemäßen Vorrichtung empfängt die Auswerte- und/oder Steuereinheit zu vorgegebenen Messzeitpunkten resultierende zweite Testimpulse als Stromimpulse über mindestens eine Schnittstelleneinheit direkt vom elektrischen Antrieb und/oder von einer Strommesseinrichtung und wertet diese aus.

Ausführungsformen der vorliegenden Erfindung können als Schaltung, Vorrichtung, Verfahren, Datenverarbeitungsprogramm mit Programmcodemitteln und/oder als Computerprogrammprodukt realisiert werden. Entsprechend kann die vorliegende Erfindung vollständig als Hardware und/oder als Software und/oder als Kombination aus Hardware- und/oder Softwarekomponenten ausgeführt werden. Zudem kann die vorliegende Erfindung als Computerprögrammprodukt auf einem computemutzbaren Speichermedium mit computerlesbarem Programmcode ausgeführt werden, wobei verschiedene computerlesbare Speichermedien wie Festplatten, CD-ROMs, optische oder magnetische Speicherelemente usw. benutzt werden können.

Die computernutzbaren oder computerlesbaren Medien können beispielsweise elektronische, magnetische, optische, elektromagnetische Infrarot- oder Halbleitersysteme, Vorrichtungen, Geräte oder Verbreitungsmedien umfassen. Zudem können die computerlesbaren Medien eine elektrische Verbindung mit einer oder mehreren Leitungen, eine tragbare Computerdiskette, einen Speicher mit direktem Zugriff (RAM), einen Nur-Lese-Speicher (ROM), einen löschbaren und programmierbaren Nur-Lese-Speicher (EPROM oder Flashspeicher, eine optischen Leitung und eine tragbare CD-ROM umfassen. Das computernutzbare oder das computerlesbare Medium kann sogar Papier oder ein anderes geeignetes Medium sein, auf welchem das Programm geschrieben ist, und von welchem es, beispielsweise durch einen optischen Abtastvorgang des Papiers oder des anderen Mediums elektrisch erfassbar ist, dann kompiliert, interpretiert oder falls erforderlich auf andere Weise verarbeitet und dann im Computerspeicher gespeichert werden kann.

Ein Ausführungsbeispiel der Erfindung ist in den Zeichnungen dargestellt und wird in der nachfolgenden Beschreibung näher erläutert.

Kurze Beschreibung der Zeichnungen

Fig. 1 zeigt ein schematisches Blockdiagramm eines Ausführungsbeispiels einer erfindungsgemäßen Vorrichtung zur Rotorlagenbestimmung einer Synchronmaschine.

Fig. 2 zeigt eine schematische Darstellung einer Winkellage des Rotors einer Synchronmaschine.

Fig. 3 zeigt einen schematischen Verlauf von Spannungsimpulsen, welche an Statorspulen einer Synchronmaschine angelegt werden.

Fig. 4 zeigt einen schematischen Verlauf von gemessenen Phasenströmen der Synchronmaschine.

Fig. 5 zeigt einen schematischen Verlauf des Gesamtstroms, der aus den gemessenen Phasenströmen der Synchronmaschine resultiert.

Ausführungsformen der Erfindung

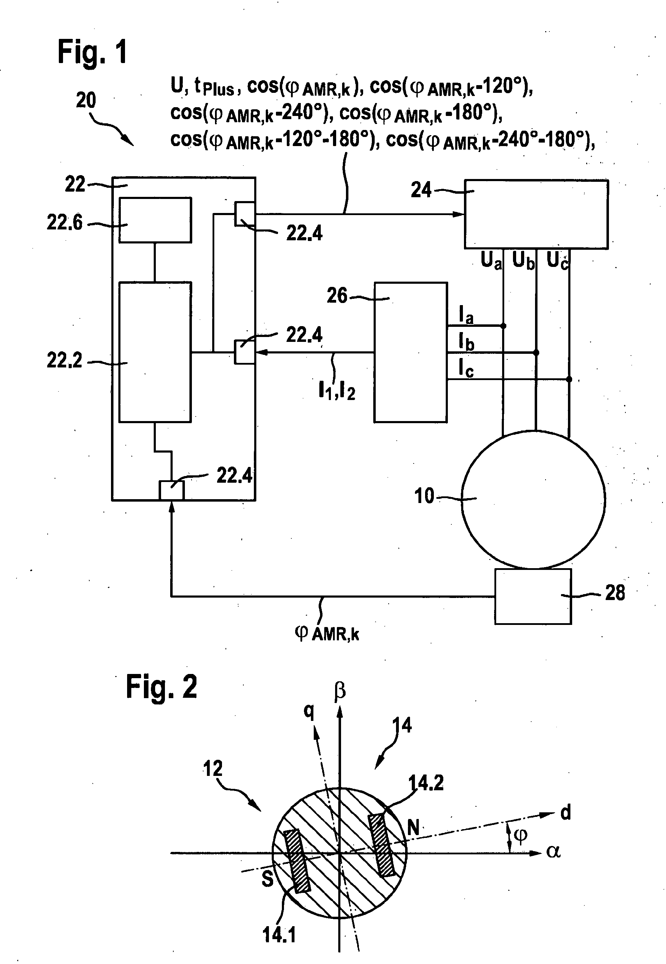

Wie aus Fig. 1 und 2 ersichtlich ist, umfasst das dargestellte Ausführungsbeispiel einer erfindungsgemäßen Vorrichtung 20 zur Ermittlung einer aktuellen Winkelposition eines drehbaren magnetischen Bauteils 12 in einem elektrischen Antrieb 10, der im dargestellten Ausführungsbeispiel eine Synchronmaschine 10 mit einem Rotor 12 aufweist, eine Winkelsensorik 28, welche einen aktuellen Winkelmesswert $\varphi_{AMR,k}$ des Rotors 12 innerhalb eines vorgegebenen eingeschränkten Winkelbereichs eindeutig misst, welcher im dargestellten Ausführungsbeispiel 0 bis 180° aufweist. Zudem weist der dargestellte elektrische Antrieb bzw. die Synchronmaschine 10 eine ungerade Polpaarzahl Zp auf.

Erfindungsgemäß empfängt eine Auswerte- und/oder Steuereinheit 22 über eine Schnittstelleneinheit 22.4 Informationen über den im eingeschränkten Winkelbereich eindeutig gemessenen aktuellen Winkelmesswert $\varphi_{AMR,k}$ und rechnet diesen gemessenen aktuellen Winkelmesswert $\varphi_{AMR,k}$ unter Verwendung von Richtung und Vorzeichen des Magnetfelds des drehbaren magnetischen Rotors 12 in eine eindeutige aktuelle Winkelposition $\varphi_k$ in einem uneingeschränkten Winkelbereich um. Hierbei ermittelt die Auswerte- und/oder Steuereinheit 22 Richtung und Vorzeichen des Magnetfelds des drehbaren magnetischen Bauteils 12 für eine Initialkonfiguration durch Auswerten von ersten Testimpulsen $U_a$, $U_b$, $U_c$, welche an die Synchronmaschine des elektrischen Antriebs 10 angelegt sind, und von zweiten Testimpulsen $I_1$, $I_2$, $I_a$, $I_b$, $I_c$, welche in der Synchronmaschine des elektrischen Antriebs 10 in Reaktion auf die angelegten ersten Testimpulse $U_a$, $U_b$, $U_c$ entstehen.

Im dargestellten Ausführungsbeispiel erzeugt die Auswerte- und/oder Steuereinheit 22 vorgegebene Informationen, welche eine bestimmte Zeitdauer $t_{Puls}$ und/oder einen bestimmten Spannungsbetrag U und/oder eine bestimmte Richtung $\cos((\varphi_{AMR})$, $\cos(\varphi_{AMR}-120°)$, $\cos(\varphi_{AMR}-240°)$, $\cos(\varphi_{AMR}-180°)$, $\cos(\varphi_{AMR}-120°-180°)$, $\cos(\varphi_{AMR}-240°-180°)$ umfassen. Die Auswerte- und/oder Steuereinheit 22 überträgt die vorgegebenen Informationen zur Erzeugung der ersten Testimpulse $U_a$, $U_b$, $U_c$ über mindestens eine Schnittstelle 22.4 an einen Spannungsgenerator 24, welcher die ersten Testimpulse als Spannungsimpulse $U_a$, $U_b$, $U_c$ in Reaktion auf die vorgegebenen Informationen erzeugt und zu vorgegebenen Ansteuerungszeitpunkten für die bestimmte Zeitdauer $t_{Puls}$ an den elektrischen Antrieb 10 anlegt. Bei einer alternativen nicht dargestellten Ausführungsform kann die Funktionalität des Spannungsgenerators 24 als Teil der Auswerte- und/oder Steuereinheit 22 ausgeführt werden, so dass die Auswerte- und/oder Steuereinheit 22 die ersten Testimpulse in Abhängigkeit von den vorgegebenen Informationen U, $t_{Puls}$, $\cos(\varphi_{AMR})$, $\cos(\varphi_{AMR}-120°)$, $\cos(\varphi_{AMR}-240°)$, $\cos(\varphi_{AMR}-180°)$, $\cos(\varphi_{AMR}-120°-180°)$, $\cos(\varphi_{AMR}-240°-180°)$ als Spannungsimpulse $U_a$, $U_b$, $U_c$ mit dem vorgegebenen Spannungsbetrag U und korrespondierenden vorgegebenen Richtungen $\cos(\varphi_{AMR})$, $\cos(\varphi_{AMR}-120°)$, $\cos(\varphi_{AMR}-240°)$, $\cos(\varphi_{AMR}-180°)$, $\cos(\varphi_{AMR}-120°-180°)$, $\cos(\varphi_{AMR}-240°-180°)$ selbst erzeugt und zu vorgegebenen Ansteuerungszeitpunkten für die bestimmte Zeitdauer $t_{Puls}$ über mindestens eine Schnittstelleneinheit 22.4 direkt an den als Synchronmaschine ausgeführten elektrischen Antrieb 10 anlegt.

Wie aus Fig. 1 weiter ersichtlich ist, empfängt die Auswerte- und/oder Steuereinheit 22 im dargestellten Ausführungsbeispiel zu vorgegebenen Messzeitpunkten resultierende zweite Testimpulse als Stromimpulse $I_1$, $I_2$ über mindestens eine Schnittstelleneinheit 22.4 von einer Strommesseinrichtung 26, welche resultierende Phasenstromimpulse $I_a$, $I_b$, $I_c$ der Synchronmaschine des elektrischen Antriebs 10 misst und aus den gemessenen Phasenstromimpulsen $I_a$, $I_b$, $I_c$ die Gesamtstromimpulse $I_1$, $I_2$ bestimmt, und wertet die resultierenden zweiten Testimpulse $I_1$, $I_2$, $I_a$, $I_b$, $I_c$ aus. Bei einer alternativen nicht dargestellten Ausführungsform kann die Funktionalität der Strommesseinrichtung 26 als Teil der Auswerteund/oder Steuereinheit 22 ausgeführt werden, so dass die Auswerte- und/oder Steuereinheit 22 die Phasenstromimpulse $I_a$, $I_b$, $I_c$ direkt in der Synchronmaschine des elektrischen Antriebs 10 misst, die Gesamtstromimpulse $I_1$, $I_2$ bestimmt und auswertet.

Zudem weist die Auswerte- und/oder Steuereinheit 22 eine Recheneinheit 22.2 und eine Speichereinheit 22.6 auf, um erforderliche Berechnungen und Speichervorgänge ausführen zu können.

Wie aus Fig. 2 weiter ersichtlich ist, umfasst das als Rotor ausgeführte drehbare magnetische Bauteil 12 ein Polpaar 14 mit einem Südpol 14.1 und einem Nordpol 14.2. In Fig. 2 bezeichnen d und q die rotorfesten magnetischen Achsen sowie α- und ß die ständerfesten Achsen und φ bezeichnet die aktuelle Winkelposition.

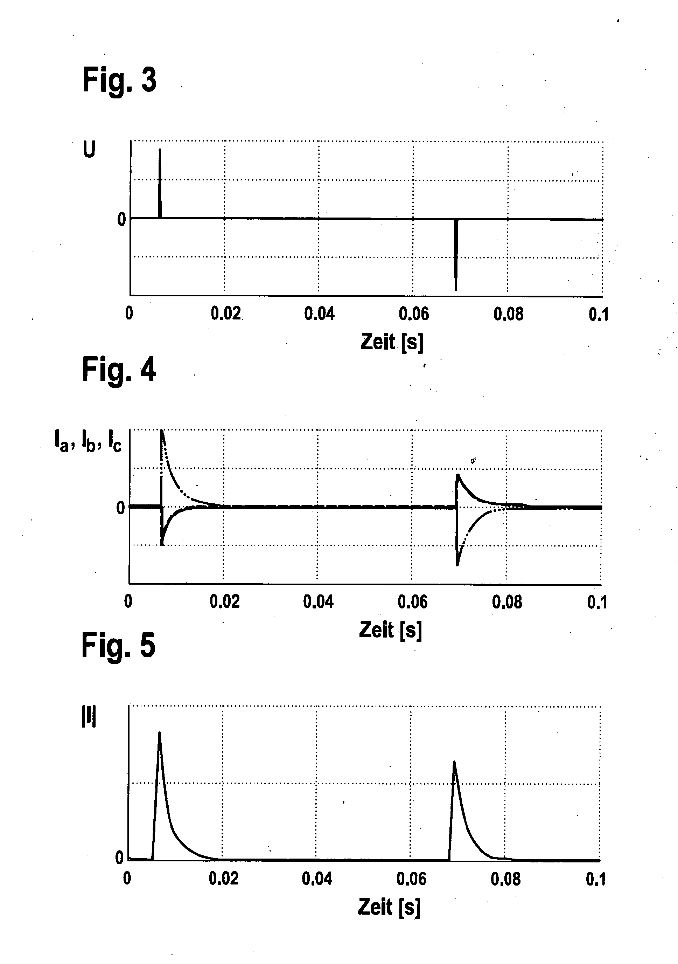

Fig. 3 bis 5 zeigen typische Verläufe des Spannungsbetrags U, der Phasenstromimpulse $I_a$, $I_b$, $I_c$ und des Strombetrags I.

Für die folgende Funktionsbeschreibung wird stets angenommen, dass die elektrische Maschine als 3-phasige Synchronmaschine 10 mit einer ungeraden Anzahl von Polpaaren ausgeführt ist. Es kann analog auch für jede andere Phasenanzahl angewendet werden. Für Ausführungsformen der vorliegenden Erfindung ist es unerheblich, ob das Magnetfeld des als Rotor ausgeführten drehbaren magnetischen Bauteils 12 von Permanentmagneten oder durch eine Wicklung elektrisch erzeugt wird. Die Winkelsensorik 28 zur eindeutigen Messung der aktuellen Winkelposition $\varphi_{AMR}$ des Rotors 12 innerhalb des vorgegebenen eingeschränkten Winkelbereichs von 0 bis 180° umfasst mindestens einen AMR-Winkelsensor, welcher einen anisotropen magnetoresistiven Effekt ausnützt.

Mit Hilfe der Winkelsensorik 28 kann der aktuelle Winkelmesswert $\varphi_{AMR,k}$ im Winkelbereich von 0 bis 180° eindeutig gemessen werden. Damit kann die Richtung-aber bei ungerader Polpaarzahl nicht das Vorzeichen - des Magnetfeldes des Rotors 14, d.h. der d-Achse, bestimmt werden. Fig. 2 zeigt beispielhaft den Aufbau des Rotors 12 mit einem Polpaar 14 und die Lage der rotorfesten magnetischen Achsen d und q. In diesem Ausführungsbeispiel gibt es genau eine d-Achse und eine q-Achse. Bei Rotoren mit mehreren Polpaaren gibt es entsprechend mehrere d- und q-Achsen. Nun ist es möglich, den Stator so zu bestromen, dass ein Stator-Magnetfeld erzeugt wird, das dieselbe Richtung hat wie das Rotor-Magnetfeld. Da der gemessene aktuelle Winkelmesswert $\varphi_{AMR,k}$ nur im Bereich von 0 bis 180° eindeutig ist, ist zu diesem Zeitpunkt nicht bekannt, ob die Vorzeichen des Rotor- und des Statormagnetfeldes gleich sind. Es ist also nicht bekannt, ob sich die beiden Magnetfelder addieren oder subtrahieren. Entsprechend dem erfindungsgemäßen Verfahren liest die Auswerte- und/oder Steuereinheit 22 den von der Winkelsensorik 28 gemessenen aktuellen Winkelmesswert $\varphi_{AMR,k}$ ein, wobei die Nulllage der Winkelposition $\varphi_k$ so festgelegt ist, dass dies der Winkel der d-Achse ist. Die nachfolgend beschriebene Bestimmund von Richtung und Vorzeichen des Magnetfelds des drehbaren magnetischen Rotors 12 wird nur einmal beim Start des als Synchronmaschine ausgeführten elektrischen Antriebs 10 im Stillstand ausgeführt. Um danach stets einen eindeutigen aktuellen Winkelmesswert $\varphi_{AMR,k}$ zu erhalten wird sichergestellt, dass der zeitliche Abstand zwischen zwei Winkelmessungen so klein ist, dass sich die Winkelposition $\varphi_k$ auch bei Maximaldrehzahl der Synchronmaschine 10 in dieser Zeit um weniger als 90° ändert.

Zu einem ersten Ansteuerzeitpunkt $t_k$ werden erste Spannungsimpulse $U_a$, $U_b$, $U_c$ an die Statorspulen für eine Zeitdauer von $t_{Puls}$ mit vorgegebenen Richtungen gemäß Gleichung (1) angelegt.

$$\begin{pmatrix} U_a \\ U_b \\ U_c \end{pmatrix} = \begin{pmatrix} \cos(\varphi_{AMR,k}) \\ \cos(\varphi_{AMR,k} - 120°) \\ \cos(\varphi_{AMR,k} - 240°) \end{pmatrix} U \qquad (1)$$

Somit gilt zum ersten Ansteuerzeitpunkt $t_k$: $U_a = U \cos(\varphi_{AMR,k})$, $U_b = U \cos(\varphi_{AMR,k}-120°)$, $U_c = U \cos(\varphi_{AMR,k}-240°)$. Hier werden der positive Spannungsbetrag U und die Zeitdauer $t_{Puls}$ so vorgegeben, dass resultierende Ströme nicht so hoch ist, dass der elektrische Antrieb 10 oder die Steuerelektronik geschädigt werden können, aber hoch genug sind, dass die Ströme mit der Stromsensorik 26 des elektrischen Antriebs 10 ausreichend genau gemessen werden können.

Aus den zu einem ersten Messzeitpunkt $t_1$ gemessenen Phasenströmen $I_a$, $I_b$, $I_c$, welche in Reaktion auf die zum ersten Ansteuerzeitpunkt $t_k$ angelegten Spannungsimpulsen $U_a$, $U_b$, $U_c$ entstehen, wird die Höhe des resultierenden ersten Gesamtstromimpulses $I_1$ mit Gleichung (2) berechnet.

$$I_{1,2} = \sqrt{I_a^2 + I_b^2 + I_c^2 - I_a I_b - I_a I_c - I_b I_c} \qquad (2)$$

Der Wert des Gesamtstromimpulses $I_1$ entspricht der Länge des Stromzeigers, die aus den drei Phasenströmen $I_a$, $I_b$, $I_c$ berechnet wird. Die Phasenströme $I_a$, $I_b$, $I_c$ werden am Ende des Spannungspulses bzw. kurz davor gemessen.

Zu einem nachfolgenden zweiten Ansteuerzeitpunkt $t_{k+1}$ werden zweite Spannungsimpulse $U_a$, $U_b$, $U_c$ an die Statorspulen für eine Zeitdauer von $t_{Plus}$ mit vorgegebenen Richtungen gemäß Gleichung (3) angelegt.

$$\begin{pmatrix} U_a \\ U_b \\ U_c \end{pmatrix} = \begin{pmatrix} \cos(\varphi_{AMR,k}) \\ \cos(\varphi_{AMR,k} - 120°) \\ \cos(\varphi_{AMR,k} - 240°) \end{pmatrix}(-U) = \begin{pmatrix} \cos(\varphi_{AMR,k} - 180°) \\ \cos(\varphi_{AMR,k} - 120° - 180°) \\ \cos(\varphi_{AMR,k} - 240° - 180°) \end{pmatrix} U \quad (3)$$

Somit gilt zum zweiten Ansteuerzeitpunkt $t_{k+1}$: $U_a$= (-U) $\cos(\varphi_{AMR,k})$=U $\cos(\varphi_{AMR,k}$-180°), $U_b$= (-U)$\cos(\varphi_{AMR,k}$-120°)= U $\cos(\varphi_{AMR,k}$-120°-180°), $U_c$ (-U) $\cos(\varphi_{AMR,k}$-240°)= U $\cos(\varphi_{AMR,k}$-240°-180°).

Aus den zum zweiten Messzeitpunkt $t_2$ gemessenen Phasenströmen $I_a$, $I_b$, Ic, welche in Reaktion auf die zum zweiten Ansteuerzeitpunkt $t_{k+1}$ angelegten Spannungsimpulsen $U_a$, $U_b$, $U_c$ entstehen, wird die Höhe des resultierenden zweiten Gesamtstromimpulses $I_2$ mit Gleichung (2) berechnet. Wichtig ist hierbei, dass die Zeitdauer ab Start der Spannungsimpulse bis zur Strommessung gleich ist wie bei den ersten Messungen.

Ist der zum ersten Messzeitpunkt $t_1$ ermittelte resultierende erste Gesamtstromimpuls $I_1$ größer oder gleich dem zum zweiten Messzeitpunkt $t_2$ ermittelten resultierenden zweiten Gesamtstromimpuls $I_2$, dann entspricht die aktuelle Winkelposition $\varphi_k$ des Rotors 12 dem von der Winkelsensorik 28 gemessenen aktuellen Winkelmesswert $\varphi_{AMR,k}$, d.h. $\varphi_k$=$\varphi$AMR k. Ist der zum ersten Messzeitpunkt $t_1$ ermittelte resultierende erste Gesamtstromimpuls $I_1$ kleiner als der zum zweiten Messzeitpunkt $t_2$ ermittelte resultierende zweite Gesamtstromimpuls $I_2$, dann entspricht die aktuelle Winkelposition $\varphi_k$ des Rotors 12 einer Winkelsumme aus dem von der Winkelsensorik 28 gemessenen aktuellen Winkelmesswert $\varphi_{AMR,k}$ und einem Korrekturwert von 180°, d.h. $\varphi_k$=$\varphi_{AMR,k}$+180°.

Die aktuelle Winkelposition $\varphi_k$ und der gemessene Winkelmesswert $\varphi_{AMR,k}$ werden im Speicher 22.6 gespeichert. Im Folgenden wird der Winkelmesswert $\varphi_{AMR,k}$ zyklisch gemessen, idealerweise in einem festen Zeitraster mit äquidistanten Winkelmesszeitpunkten $t_1$ bis $t_n$. In jedem Winkelmesszeitpunkt $t_k$ mit k = 1 bis n wird aus einem alten gemessenen Winkelmesswert $\varphi_{AMR,k-1}$ vom letzten Winkelmesszeitpunkt $t_{k-1}$, der zum letzten Messzeitpunkt $t_{k-1}$ berechneten alten Winkel-position $\varphi_{k-1}$ und einem zum aktuellen Zeitpunkt $t_k$ gemessenen aktuellen Winkelmesswert $\varphi_{AMR,k}$ die neue aktuelle Winkelposition $\varphi_k$ des Rotors 12 berechnet.

Wenn der Differenzbetrag zwischen dem alten gemessenen Winkelmesswert $\varphi_{AMR,k-1}$ und dem gemessenen aktuellen Winkelmesswert $\varphi_{AMR,k}$ kleiner als das Produkt aus der zeitlichen Differenz der Winkelmesszeitpunkte ($t_k$ - $t_{k-1}$) und der maximal möglichen Winkelgeschwindigkeit $\omega_{max}$ ist, d.h. $|\varphi_{AMR,k} - \varphi_{AMR,k-1}| < (t_k - t_{k-1})\omega_{max}$ dann hat die aktuelle Winkelposition $\varphi_k$ des Rotors 12 die Grenze 0°/180° noch nicht überschritten, wobei $\omega_{max}$ die maximal mögliche Winkelgeschwindigkeit der Synchronmaschine 10 ist. Daher berechnet sich die aktuelle Winkelposition $\varphi_k$ des Rotors 12 für diesen Fall aus Gleichung (4).

$$\varphi_k = \varphi_{k-1} + \varphi_{AMR,k} - \varphi_{AMR,k-1} \qquad (4)$$

Wenn der Differenzbetrag zwischen dem alten gemessenen Winkelmesswert $\varphi_{AMR,k-1}$ und dem aktuell gemessenen Winkelmesswert $\varphi_{AMR,k}$ größer als das Produkt aus der zeitlichen Differenz der Messzeitpunkte ($t_k$ - $t_{k-1}$) und der maximal möglichen Winkelgeschwindigkeit $\omega_{max}$ ist, d.h. $|\varphi_{AMR,k} - \varphi_{AMR,k-1}| > (t_k - t_{k-1})\omega_{max}$ dann hat die aktuelle Winkelposition $\varphi_k$ des Rotors 12 die Grenze 0°/180° überschritten, wobei $\omega_{max}$ die maximal mögliche Winkelgeschwindigkeit der Synchronmaschine ist. Daher berechnet sich die aktuelle Winkelposition $\varphi_k$ des Rotors 12 für diesen Fall aus Gleichung (5).

$$\varphi_k = \text{mod}(\varphi_{k-1} + \varphi_{AMR,k} - \varphi_{AMR,k-1} + 180°, 360°) \qquad (5)$$

Fig. 3 bis 5 zeigen typische Verläufe des Spannungsbetrags U, der Phasenstromimpulse $I_a$, $I_b$, $I_c$ und des Strombetrags I. Es ist klar zu erkennen, dass der erste Gesamtstromimpuls $I_1$ höher ist als der zweite Gesamtstromimpuls $I_2$. Somit wurden die erste Spannungspulse also in Richtung des Permanentmagnet-Nordpols angelegt, so dass sich Stator- und Rotorfeld positiv überlagern.

Ausführungsformen der vorliegenden Erfindung können in jedem elektrischen Antrieb eingesetzt werden, wenn eine Winkelsensorik, welche die aktuelle Winkelposition des Rotors innerhalb eines vorgegebenen eingeschränkten Winkelbereichs eindeutig misst, und eine Stromsensorik vorhanden sind und der elektrische Antrieb eine ungerade Anzahl von Polpaaren aufweist.

**Patentansprüche**

1. Verfahren zur Ermittlung einer aktuellen Wickelposition eines drehbaren magnetischen Bauteils (12) in einem elektrischen Antrieb (10), der eine ungerade Polpaarzahl (Zp) aufweist,

   wobei ein aktueller Winkelmesswert ($\varphi_{AMR,k}$) des drehbaren Bauteils (12) mit einer Winkelsensorik (28) gemessen wird, welche den aktuellen Winkelmesswert ($\varphi_{AMR,k}$) nur innerhalb eines vorgegebenen eingeschränkten Winkelbereichs von 360°/Zp eindeutig misst, **dadurch gekennzeichnet, dass** der im eingeschränkten Winkelbereich eindeutig gemessene aktuelle Winkelmesswert ($\varphi_{AMR,k}$) unter Verwendung von Richtung und Vorzeichen des Magnetfelds des drehbaren magnetischen Bauteils (12) in eine eindeutige aktuelle Winkelposition ($\varphi_k$) in einem uneingeschränkten Winkelbereich von 0 bis 360° umgerechnet wird,

   wobei Richtung und Vorzeichen des Magnetfelds des drehbaren magnetischen Bauteils (12) durch Anlegen von ersten Testimpulsen ($U_a$, $U_b$, $U_c$) an den elektrischen Antrieb (10) und durch Auswerten von resultierenden zweiten Testimpulsen ($I_1$, $I_2$, $I_a$, $I_b$, $I_c$), welche im elektrischen Antrieb (10) in Reaktion auf die angelegten ersten Testimpulsen ($U_a$, $U_b$, $U_c$) entstehen, ermittelt werden, und

   wobei resultierende zweite Testimpulse ($I_1$, $I_2$, $I_a$, $I_b$, $I_c$), welche in Reaktion auf erste Testimpulse ($U_a$, $U_b$, $U_c$) erzeugt werden, welche an zwei aufeinanderfolgenden Ansteuerungszeitpunkten ($t_k$, $t_{k+1}$) an den elektrischen Antrieb (10) angelegt wurden, zur Ermittlung einer bezüglich eines ersten Ansteuerungszeitpunkts ($t_k$) resultierenden Länge eines ersten Gesamtstromimpulses ($I_1$) und einer bezüglich eines zweiten Ansteuerungszeitpunkts ($t_{k+1}$) resultierenden Länge eines zweiten Gesamtstromimpulses ($I_2$) ausgewertet werden, wobei der im eingeschränkten Winkelbereich eindeutig gemessene aktuelle Winkelmesswert ($\varphi_{AMR,k}$) unter Verwendung der Länge des ersten Gesamtstromimpulses ($I_1$) und der Länge des zweiten Gesamtstromimpulses ($I_2$), aus welchen Richtung und Vorzeichen des Magnetfelds des drehbaren magnetischen Bauteils (12) bestimmt werden, in eine eindeutige aktuelle Winkelposition ($\varphi_k$) im uneingeschränkten Winkelbereich umgerechnet wird.

2. Verfahren nach Anspruch 1, **dadurch gekennzeichnet, dass** Richtung und Vorzeichen des Magnetfelds des drehbaren magnetischen Bauteils (12) einmalig für die jeweilige Initialkonfiguration bestimmt werden.

3. Verfahren nach Anspruch 2, **dadurch gekennzeichnet, dass** der für den eingeschränkten Winkelbereich eindeutige aktuelle Winkelmesswert ($\varphi_{AMR,k}$) zyklisch gemessen wird,

   wobei der für die jeweilige Initialkonfiguration im eingeschränkten Winkelbereich eindeutig gemessene aktuelle Winkelmesswert ($\varphi_{AMR,k}$) und die daraus berechnete eindeutige aktuelle Winkelposition ($\varphi_k$) im uneingeschränkten Winkelbereich nach der Berechnung der aktuellen Winkelposition ($\varphi_k$) als alter Winkelmesswert ($\varphi_{AMR,k-1}$) bzw. alte Winkelposition ($\varphi_{k-1}$) gespeichert werden,

   wobei die für den uneingeschränkten Winkelbereich eindeutige aktuelle Winkelposition ($\varphi_k$) für einen ersten Zeitpunkt ($t_k$) basierend auf der alten Winkelposition ($\varphi_{k-1}$) und dem alten Winkelmesswert ($\varphi_{AMR,k-1}$) und dem im eingeschränkten Winkelbereich eindeutig gemessenen aktuellen Winkelmesswert ($\varphi_{AMR,k}$) berechnet wird, und

   wobei nach der Berechnung der aktuellen Winkelposition ($\varphi_k$), der gemessene aktuelle Winkelmesswert ($\varphi_{AMR,k}$) und die daraus ermittelte aktuelle Winkelposition ($\varphi_k$) als alter Winkelmesswert ($\varphi_{AMR,k-1}$) bzw. alte Winkelposition ($\varphi_{k-1}$) gespeichert werden.

4. Verfahren nach einem der Ansprüche 1 bis 3, **dadurch gekennzeichnet, dass** die ersten Testimpulse ($U_a$, $U_b$, $U_c$) in Abhängigkeit von vorgegebenen Informationen ($U$, $t_{Puls}$, $\cos(\varphi_{AMR,k})$, $\cos(\varphi_{AMR,k}-120°)$, $\cos(\varphi_{AMR,k}-240°)$, $\cos(\varphi_{AMR,k}-180°)$, $\cos(\varphi_{AMR,k}-120°-180°)$, $\cos(\varphi_{AMR,k}-240°-180°)$) erzeugt und zu vorgegebenen Ansteuerungszeitpunkten ($t_k$, $t_{k+1}$) für eine bestimmte Zeitdauer ($t_{Puls}$) an den elektrischen Antrieb (10) angelegt werden, wobei die vorgegebenen Informationen eine bestimmte Zeitdauer ($t_{Puls}$) und/oder einen bestimmten Spannungsbetrag ($U$) und/oder eine bestimmte Richtung ($\cos(\varphi_{AMR,k}-120°)$, $\cos(\varphi_{AMR,k}-240°)$, $\cos(\varphi_{AMR,k}-180°)$, $\cos(\varphi_{AMR,k}-120°-180°)$, $\cos(\varphi_{AMR,k}-240°-180°)$), welche in Abhängigkeit des aktuellen Winkelmesswerts ($\varphi_{AMR,k}$) bestimmt wird, umfassen.

5. Verfahren nach einem der Ansprüche 1 bis 4, **dadurch gekennzeichnet, dass** die ersten Testimpulse für die bestimmte Zeitdauer ($t_{Puls}$) als Spannungsimpulse ($U_a$, $U_b$, $U_c$) mit dem vorgegebenen Spannungsbetrag ($U$) und korrespondierenden vorgegebenen Richtungen ($\cos(\varphi_{AMR,k}-120°)$, $\cos(\varphi_{AMR,k}-240°)$, $\cos(\varphi_{AMR,k}-180°)$, $\cos(\varphi_{AMR,k}-120°-180°)$, $\cos(\varphi_{AMR,k}-240°-180°)$) zu vorgegebenen Ansteuerungszeitpunkten ($t_k$, $t_{k+1}$) an Statorspulen des elektrischen Antriebs (10) angelegt werden,

   wobei zu vorgegebenen Messzeitpunkten ($t_1$, $t_2$) resultierende zweite Testimpulse als Stromimpulse ($I_1$, $I_2$, $I_a$, $I_b$, $I_c$) gemessen und ausgewertet werden, und

   wobei die vorgegebenen Messzeitpunkte ($t_1$, $t_2$) im Wesentlichen gleiche Zeitabstände zu korrespondierenden Ansteuerungszeitpunkten ($t_k$, $t_{k+1}$) aufweisen.

6. Vorrichtung zur Ermittlung einer aktuellen Winkelposition eines drehbaren magnetischen Bauteils (12) in einem elektrischen Antrieb (10) mit einer Winkelsensorik (28), welche einen aktuellen Winkelmesswert ($\varphi_{AMR,k}$) des drehbaren Bauteils (12) innerhalb eines vorgegebenen eingeschränkten Winkelbereichs von 360°/Zp eindeutig,misst, wobei der elektrische Antrieb (10) eine ungerade Polpaarzahl (Zp) aufweist, **gekennzeichnet durch** eine Auswerte- und/oder Steuereinheit (22), welche über eine Schnittstelleneinheit (22.4) Informationen über den gemessen aktuellen Winkelmesswert ($\varphi_{AMR,k}$) empfängt, wobei die Auswerte- und/oder Steuereinheit (22) den für den eingeschränkten Winkelbereich eindeutig gemessenen aktuellen Winkelmesswert ($\varphi_{AMR,k}$) unter Verwendung von Richtung und Vorzeichen des Magnetfelds des drehbaren magnetischen Bauteils (12) in eine eindeutige aktuelle Winkelposition ($\varphi_k$) in einem uneingeschränkten Winkelbereich von 0 bis 360° umrechnet,

wobei die Auswerte- und/oder Steuereinheit (22) Richtung und Vorzeichen des Magnetfelds des drehbaren magnetischen Bauteils (12) für eine Initialkonfiguration **durch** Auswerten von ersten Testimpulsen ($U_a$, $U_b$, $U_c$), welche an den elektrischen Antrieb (10) angelegt sind, und von zweiten Testimpulsen ($I_1$, $I_2$, $I_a$, $I_b$, $I_c$) ermittelt, welche im,elektrischen Antrieb (10) in Reaktion auf die angelegten ersten Testimpulsen ($U_a$, $U_b$, $U_c$) entstehen, und wobei die Auswerte- und/oder Steuereinheit (22) resultierende zweite Testimpulse ($I_1$, $I_2$, $I_a$, $I_b$, $I_c$), welche in Reaktion auf erste Testimpulse ($U_a$, $U_b$, $U_c$) erzeugbar sind, welche an zwei aufeinanderfolgenden Ansteuerungszeitpunkten ($t_k$, $t_{k+1}$) an den elektrischen Antrieb (10) angelegt sind, zur Ermittlung einer bezüglich eines ersten Ansteuerungszeitpunkts ($t_k$)resultierenden Länge eines ersten Gesamtstromimpulses ($I_1$) und einer bezüglich eines zweiten Ansteuerungszeitpunkts ($t_{k+1}$) resultierenden Länge eines zweiten Gesamtstromimpulses ($I_2$) auswertet, wobei die Auswerte- und/oder Steuereinheit (22) den für den eingeschränkten Winkelbereich eindeutig gemessenen aktuellen Winkelmesswert ($\varphi_{AMR,k}$) unter Verwendung der Länge des ersten Gesamtstromimpulses ($I_1$) und der Länge des zweiten Gesamtstromimpulses($I_2$), aus welchen Richtung und Vorzeichen des Magnetfelds des drehbaren magnetischen Bauteils (12) bestimmbar sind, in eine eindeutige aktuelle Winkelposition ($\varphi_k$) im uneingeschränkten Winkelbereich umrechnet.

7. Vorrichtung nach Anspruch 6, **dadurch gekennzeichnet, dass** die Auswerte- und/oder Steuereinheit (22) die ersten Testimpulse in Abhängigkeit von vorgegebenen Informationen (U, $t_{Puls}$, $\cos(\varphi_{AMR,k}-120°)$, $\cos(\varphi_{AMR,k}-240°)$, $\cos(\varphi_{AMR,k}-18O°)$, $\cos(\varphi_{AMR,k}-120°-180°)$, $\cos(\varphi_{AMR,k}-240°-180°)$ als Spannungsimpulse ($U_a$, $U_b$, $U_c$) mit dem vorgegebenen Spannungsbetrag (U) und korrespondierenden vorgegebenen Richtungen ($\cos(\varphi_{AMR,k}-12O°)$, $\cos(\varphi_{AMR,k}-240°)$, $\cos(\varphi_{AMR,k}-180°)$, $\cos(\varphi_{AMR,k}-120°-180°)$, $\cos(\varphi_{AMR,k}-240°-180°)$) selbst erzeugt und zu vorgegebenen Ansteuerungszeitpunkten ($t_k$, $t_{k+1}$) für eine bestimmte Zeitdauer ($t_{Puls}$) über mindestens eine Schnittstelleneinheit (22.4) direkt an den elektrischen Antrieb (10) anlegt oder vorgegebene Informationen (U, $t_{Puls}$, $\cos(\varphi_{AMR,k}-120°)$, $\cos(\varphi_{AMR,k}-240°)$, $\cos(\varphi_{AMR,k}-180°)$, $\cos(\varphi_{AMR,k}-120°-180°)$, $\cos(\varphi_{AMR,k}-240°-180°)$) zur Erzeugung der ersten Testimpulse ($U_a$, $U_b$, $U_c$) über mindestens eine Schnittstelle (22.4) an einen Spannungsgenerator (24) anlegt, welcher die erste Testimpulse ($U_a$, $U_b$, $U_c$) in Reaktion auf die vorgegebenen Informationen (U, $t_{Puls}$, $\cos(\varphi_{AMR,k}-120°)$, $\cos(\varphi_{AMR,k}-240°)$, $\cos(\varphi_{AMR,k}-180°)$, $\cos(\varphi_{AMR,k}-120°-180°)$, $\cos(\varphi_{AMR,k}-240°-180°)$) erzeugt und zu den vorgegebenen Ansteuerungszeitpunkten ($t_k$, $t_{k+1}$) für die bestimmte Zeitdauer ($t_{Puls}$) an den elektrischen Antrieb (10) anlegt.

8. Vorrichtung nach Anspruch 6 oder 7, **dadurch gekennzeichnet, dass** die Auswerte- und/oder Steuereinheit (22) zu vorgegebenen Messzeitpunkten ($t_1$, $t_2$) resultierende zweite Testimpulse als Stromimpulse ($I_1$, $I_2$, $I_a$, $I_b$, $I_c$) über mindestens eine Schnittstelleneinheit (22.4) direkt vom elektrischen Antrieb (10) und/oder von einer Strommesseinrichtung (26) empfängt und auswertet.

## Claims

1. Method for determining a current angular position of a rotatable magnetic component (12) in an electric drive (10) which has an uneven number (Zp) of pole pairs, wherein a current angle measured value ($\varphi_{AMR,k}$) of the rotatable component (12) is measured with an angle sensor system (28) which unambiguously measures the current angle measured value ($\varphi_{AMR,k}$) only within a predefined limited angle range of 360°/Zp, **characterized in that** the current angle measured value ($\varphi_{AMR,k}$) which is unambiguously measured in the limited angle range is converted into an unambiguous current angular position ($\varphi_k$) in an unlimited angle range of 0 to 360° using the direction and sign of the magnetic field of the rotatable magnetic component (12),

wherein the direction and sign of the magnetic field of the rotatable magnetic component (12) are determined by applying first test pulses ($U_a$, $U_b$, $U_c$) to the electric drive (10) and by evaluating resulting second test pulses ($I_1$, $I_2$, $I_a$, $I_b$, $I_c$) which are produced in the electric drive (10) in reaction to the applied first test pulses ($U_a$, $U_b$, $U_c$), and wherein resulting second test pulses ($I_1$, $I_2$, $I_a$, $I_b$, **$I_c$**), which are generated in reaction to first test pulses ($U_a$, $U_b$, $U_c$) which have been applied to the electric drive (10) at two successive actuation times ($t_k$, $t_{k+1}$), are evaluated in order to determine a length, resulting with respect to a first actuation time ($t_k$), of a first total current pulse ($I_1$) and of a length, resulting with respect to a second actuation time ($t_{k+1}$), of a second total current pulse ($I_2$), wherein the current angle measured value ($\varphi_{AMR,k}$), which is measured unambiguously in the limited angle range, is converted into an unambiguous current angular position ($\varphi_k$) in the unlimited angle range using the length of the first total current pulse ($I_1$) and the length of the second total current pulse ($I_2$), from which the direction and sign of the magnetic field of the rotatable magnetic component (12) are determined.

2. Method according to Claim 1, **characterized in that** the direction and sign of the magnetic field of the rotatable magnetic component (12) are determined once for the respective initial configuration.

3. Method according to Claim 2, **characterized in that** the current angle measured value ($\varphi_{AMR,k}$) which is unambiguous for the limited angle range is measured cyclically,
wherein the current angle measured value ($\varphi_{AMR,k}$) which is measured unambiguously for the respective initial configuration in the limited angle range and the unambiguous current angular position ($\varphi_k$) which is calculated therefrom in the unlimited angle range are stored, after the calculation of the current angular position ($\varphi_k$), as an old angle measured value ($\varphi_{AMR,k-1}$) or old angular position ($\varphi_{k-1}$),
wherein the current angular position ($\varphi_k$), which is unambiguous for the unlimited angle range, for a first time ($t_k$) is calculated on the basis of the old angular position ($\varphi_{k-1}$) and the old angle measured value ($\varphi_{AMR,k-1}$) and the current angle measured value ($\varphi_{AMR,k}$) which is measured unambiguously in the limited angle range, and wherein, after the calculation of the current angular position ($\varphi_k$), the measured current angle measured value ($\varphi_{AMR,k}$) and the current angular position ($\varphi_k$) which is determined therefrom are stored as an old angle measured value ($\varphi_{AMR,k-1}$) or old angular position ($\varphi_{k-1}$).

4. Method according to one of Claims 1 to 3, **characterized in that** the first test pulses ($U_a$, $U_b$, $U_c$) are generated as a function of predefined information ($U$, $t_{Puls}$, $\cos(\varphi_{AMR,k})$, $\cos(\varphi_{AMR,k}-120°)$, $\cos(\varphi_{AMR,k}-240°)$, $\cos(\varphi_{AMR,k}-180°)$, $\cos(\varphi_{AMR,k}-120°-180°)$, $\cos(\varphi_{AMR,k}-240°-180°)$) and are applied to the electric drive (10) at predefined actuation times ($t_k$, $t_{k+1}$) for a specific time period ($t_{Puls}$), wherein the predefined information comprises a specific time period ($t_{Puls}$) and/or a specific voltage absolute value ($U$) and/or a specific direction ($\cos(\varphi_{AMR,k}-120°)$, $\cos(\varphi_{AMR,k}-240°)$, $\cos(\varphi_{AMR,k}-180°)$, $\cos(\varphi_{AMR,k}-120°-180°)$, $\cos(\varphi_{AMR,k}-240°-180°)$), which is determined as a function of the current angle measured value ($\varphi_{AMR,k}$).

5. Method according to one of Claims 1 to 4, **characterized in that** the first test pulses are applied, as voltage pulses ($U_a$, $U_b$, $U_c$) with the predefined voltage absolute value ($U$) and corresponding predefined directions ($\cos(\varphi_{AMR,k}-120°)$, $\cos(\varphi_{AMR,k}-240°C)$, $\cos(\varphi_{AMR,k}-180°)$, $\cos(\varphi_{AMR,k}-120°-180°)$, $\cos(\varphi_{AMR,k}-240°-180°)$), to stator coils of the electric drive (10) at predefined actuation times ($t_k$, $t_{k+1}$) for the specific time period ($t_{puls}$), wherein second test pulses resulting are measured and evaluated as current pulses ($I_1$, $I_2$, $I_a$, $I_b$, $I_c$) at predefined measuring times ($t_1$, $t_2$),
and
wherein the predefined measuring times ($t_1$, $t_2$) have substantially the same time intervals from corresponding actuation times ($t_k$, $t_{k+1}$).

6. Device for determining a current angular position of a rotatable magnetic component (12) in an electric drive (10) having an angle sensor system (28) which unambiguously measures a current angle measured value ($\varphi_{AMR,k}$) of the rotatable component (12) within a predefined limited angle range of 360°/Zp, wherein the electric drive (10) has an uneven number (Zp) of pole pairs, **characterized by** an evaluation and/or control unit (22) which receives information about the measured current angle measured value ($\varphi_{AMR,k}$) via an interface unit (22.4), wherein the evaluation and/or control unit (22) converts the current angle measured value ($\varphi_{AMR,k}$), which is measured unambiguously for the limited angle range, into an unambiguous current angular position ($\varphi_k$) in an unlimited angle range of 0 to 360° using the direction and sign of the magnetic field of the rotatable magnetic component (12), wherein the evaluation and/or control unit (22) determines the direction and sign of the magnetic field of the rotatable magnetic component (12) for an initial configuration by evaluating first test pulses ($U_a$, $U_b$, $U_c$) which are applied to the electric drive (10), and second test pulses ($I_1$, $I_2$, $I_a$, $I_b$, $I_c$) which are produced in the electric drive (10) in reaction to the applied first test pulses ($U_a$, $U_b$, $U_c$), and wherein the evaluation and/or control unit (22) evaluates resulting second test pulses ($I_1$, $I_2$, $I_a$, $I_b$, $I_c$), which can be generated in reaction to first test pulses ($U_a$, $U_b$, $U_c$) which are applied to the electric drive (10) at two successive actuation times ($t_k$, $t_{k+1}$), in order to determine a length, resulting with respect to a first actuation time ($t_k$), of a first total current pulse ($I_1$) and a length, resulting with respect to a second actuation time ($t_{k+1}$), of a second total current pulse ($I_2$), wherein the evaluation and/or control unit (22) converts the current angle measured value ($\varphi_{AMR,k}$), which has been unambiguously measured for the limited angle range, into an unambiguous current angular position ($\varphi_k$)

in the unlimited angle range using the length of the first total current pulse ($I_1$) and the length of the second total current pulse ($I_2$), from which the direction and sign of the magnetic field of the rotatable magnetic component (12) can be determined.

**7.** Device according to Claim 6, **characterized in that** the evaluation and/or control unit (22) itself generates the first test pulses as voltage pulses ($U_a$, $U_b$, $U_c$) with the predefined voltage absolute value ($U$) and corresponding predefined directions ($\cos(\varphi_{AMR,k}-120°)$, $\cos(\varphi_{AMR,k}-240°)$, $\cos(\varphi_{AMR,k}-180°)$, $\cos(\varphi_{AMR,k}-120°-180°)$, $\cos(\varphi_{AMR,k}-240°-180°)$) as a function of predefined information ($U$, $t_{Puls}$, $\cos(\varphi_{AMR,k}-120°)$, $\cos(\varphi_{AMR,k}-240°)$, $\cos(\varphi_{AMR,k}-180°)$, $\cos(\varphi_{AMR,k}-120°-180°)$, $\cos(\varphi_{AMR,k}-240°-180°)$), and applies said first test pulses directly to the electric drive (10) via at least one interface unit (22.4) at predefined actuation times ($t_k$, $t_{k+1}$) for a specific time period ($t_{Puls}$), or applies predefined information ($U$, $t_{Puls}$, $\cos(\varphi_{AMR,k}-120°)$, $\cos(\varphi_{AMR,k}-240°)$, $\cos(\varphi_{AMR,k}-180°)$, $\cos(\varphi_{AMR,k}-120°-180°)$, $\cos(\varphi_{AMR,k}-240°-180°)$) to a voltage generator (24) via at least one interface unit (22.4) in order to generate the first test pulses ($U_a$, $U_b$, $U_c$), which voltage generator (24) generates the first test pulses ($U_a$, $U_b$, $U_c$) in reaction to the predefined information ($U$, $t_{Puls}$, $\cos(\varphi_{AMR,k}-120°)$, $\cos(\varphi_{AMR,k}-240°)$, $\cos(\varphi_{AMR,k}-180°)$, $\cos(\varphi_{AMR,k}-120°-180°)$, $\cos(\varphi_{AMR,k}-240°-180°)$) and applies said first test pulses ($U_a$, $U_b$, $U_c$) to the electric drive (10) at the predefined actuation times ($t_k$, $t_{k+1}$) for the specific time period ($t_{Puls}$).

**8.** Device according to Claim 6 or 7, **characterized in that** the evaluation and/or control unit (22) receives second test pulses resulting at predefined measuring times ($t_1$, $t_2$), as current pulses ($I_1$, $I_2$, $I_a$, $I_b$, $I_c$), directly from the electric drive (10) and/or from a current-measuring device (26) via at least one interface unit (22.4), and evaluates them.

### Revendications

**1.** Procédé de détermination d'une position angulaire actuelle d'un composant magnétique rotatif (12) dans un mécanisme d'entraînement électrique (10), lequel possède un nombre impair de paires de pôles ($Zp$), une valeur mesurée actuelle de l'angle ($\varphi_{AMR,k}$) du composant rotatif (12) étant mesurée avec un dispositif de détection d'angle (28), lequel mesure de manière univoque la valeur mesurée actuelle de l'angle ($\varphi_{AMR,k}$) seulement à l'intérieur d'une plage angulaire limitée prédéfinie égale à 360°/Zp, **caractérisé en ce que** la valeur mesurée actuelle de l'angle ($\varphi_{AMR,k}$), mesurée de manière univoque dans la plage angulaire limitée, est convertie en une position angulaire actuelle ($\varphi_k$) univoque dans une plage angulaire illimitée de 0 à 360° en utilisant la direction et le signe du champ magnétique du composant magnétique rotatif (12), la direction et le signe du champ magnétique du composant magnétique rotatif (12) étant déterminés en appliquant des premières impulsions de test ($U_a$, $U_b$, $U_c$) au mécanisme d'entraînement électrique (10) et en interprétant des deuxièmes impulsions de test ($I_1$, $I_2$, $I_a$, $I_b$, $I_c$) qui en résultent, lesquelles se produisent dans le mécanisme d'entraînement électrique (10) en réaction aux premières impulsions de test ($U_a$, $U_b$, $U_c$) appliquées, et les deuxièmes impulsions de test ($I_1$, $I_2$, $I_a$, $I_b$, $I_c$) résultantes, qui sont générées en réaction aux premières impulsions de test ($U_a$, $U_b$, $U_c$) qui ont été appliquées au mécanisme d'entraînement électrique (10) à deux instants d'excitation successifs ($t_k$, $t_{k+1}$), étant interprétées en vue de déterminer une longueur résultante d'une première impulsion de courant totale ($I_1$) en référence à un premier instant d'excitation ($t_k$) et une longueur résultante d'une deuxième impulsion de courant totale ($I_2$) en référence à un deuxième instant d'excitation ($t_{k+1}$), la valeur mesurée actuelle de l'angle ($\varphi_{AMR,k}$), mesurée de manière univoque dans la plage angulaire limitée, étant convertie en une position angulaire actuelle ($\varphi_k$) univoque dans la plage angulaire illimitée en utilisant la longueur de la première impulsion de courant totale ($I_1$) et la longueur de la deuxième impulsion de courant totale ($I_2$) à partir desquelles sont déterminés la direction et le signe du champ magnétique du composant magnétique rotatif (12).

**2.** Procédé selon la revendication 1, **caractérisé en ce que** la direction et le signe du champ magnétique du composant magnétique rotatif (12) sont déterminés une fois pour la configuration initiale correspondante.

**3.** Procédé selon la revendication 2, **caractérisé en ce que** la valeur mesurée actuelle de l'angle ($\varphi_{AMR,k}$), univoque pour la plage angulaire limitée, est mesurée de manière cyclique, la valeur mesurée actuelle de l'angle ($\varphi_{AMR,k}$), mesurée de manière univoque dans la plage angulaire limitée pour la configuration initiale correspondante, et la position angulaire actuelle ($\varphi_k$) univoque calculée à partir de celle-ci dans la plage angulaire illimitée étant mises en mémoire en tant qu'ancienne valeur mesurée de l'angle ($\varphi_{AMR,k-1}$) ou ancienne position angulaire ($\varphi_{k-1}$), la position angulaire actuelle ($\varphi_k$) univoque pour la plage angulaire illimitée étant calculée pour un premier instant ($t_k$) en se basant sur l'ancienne position angulaire ($\varphi_{k-1}$) et l'ancienne valeur mesurée de l'angle ($\varphi_{AMR,k-1}$) ainsi que la valeur mesurée actuelle de l'angle ($\varphi_{AMR,k}$) mesurée de manière univoque dans la plage angulaire limitée, et

après le calcul de la position angulaire actuelle ($\varphi_k$), la valeur mesurée actuelle de l'angle ($\varphi_{AMR,k}$) mesurée et la position angulaire actuelle ($\varphi_k$) déterminée à partir de celle-ci étant mises en mémoire en tant qu'ancienne valeur mesurée de l'angle ($\varphi_{AMR,k-1}$) ou ancienne position angulaire ($\varphi_{k-1}$).

4. Procédé selon l'une des revendications 1 à 3, **caractérisé en ce que** les premières impulsions de test ($U_a$, $U_b$, $U_c$) sont générées en fonction d'informations prédéfinies (U, $t_{Puls}$, cos ($\varphi_{AMR,k}$), cos ($\varphi_{AMR,k}$-120°), cos($\varphi_{AMR,k}$-240°), cos($\varphi_{AMR,k}$-180°), cos($\varphi_{AMR,k}$-120°-180°), cos($\varphi_{AMR,k}$-240°-180°)) et sont appliquées à des instants d'excitation ($t_k$, $t_{k+1}$) prédéfinis pendant une durée donnée ($t_{Puls}$) au mécanisme d'entraînement électrique (10), les informations prédéfinies comprenant une durée donnée ($t_{Puls}$) et/ou une valeur de tension (U) donnée et/ou une direction donnée (cos($\varphi_{AMR,k}$-120°), cos($\varphi_{AMR,k}$-240°), cos($\varphi_{AMR,k}$-180°), cos($\varphi_{AMR,k}$-120°-180°), cos($\varphi_{AMR,k}$-240°-180°)), laquelle est définie en fonction de la valeur mesurée actuelle de l'angle ($\varphi_{AMR,k}$).

5. Procédé selon l'une des revendications 1 à 4, **caractérisé en ce que** les premières impulsions de test sont appliquées à des bobines de stator du mécanisme d'entraînement électrique (10) pendant la durée donnée **($t_{Puls}$)** sous la forme d'impulsions de tension ($U_a$, $U_b$, $U_c$) ayant la valeur de tension (U) prédéfinie et les directions prédéfinies (cos($\varphi_{AMR,k}$-120°), cos($\varphi_{AMR,k}$-240°), cos($\varphi_{AMR,k}$-180°), cos($\varphi_{AMR,k}$-120°-180°), cos($\varphi_{AMR,k}$-240°-180°)) correspondantes aux instants d'excitation ($t_k$, $t_{k+1}$) prédéfinis,
des deuxièmes impulsions de test qui résultent à des instants de mesure ($t_1$, $t_2$) prédéfinis étant mesurées et interprétées sous la forme d'impulsions de courant ($I_1$, $I_2$, $I_a$, $I_b$, $I_c$), et
les instants de mesure ($t_1$, $t_2$) prédéfinis présentant sensiblement les mêmes intervalles de temps par rapport à des instants d'excitation ($t_k$, $t_{k+1}$) correspondants.

6. Dispositif de détermination d'une position angulaire actuelle d'un composant magnétique rotatif (12) dans un mécanisme d'entraînement électrique (10), comprenant un dispositif de détection d'angle (28), lequel mesure de manière univoque une valeur mesurée actuelle de l'angle ($\varphi_{AMR,k}$) du composant rotatif (12) à l'intérieur d'une plage angulaire limitée prédéfinie égale à 360°/Zp, le mécanisme d'entraînement électrique (10) possédant un nombre impair de paires de pôles (Zp), **caractérisé par** une unité d'interprétation et/ou de commande (22) qui reçoit, par le biais d'une unité d'interface (22.4), des informations à propos de la valeur mesurée actuelle de l'angle ($\varphi_{AMR,k}$) mesurée, l'unité d'interprétation et/ou de commande (22) convertissant la valeur mesurée actuelle de l'angle ($\varphi_{AMR,k}$), mesurée de manière univoque pour la plage angulaire limitée, en une position angulaire actuelle ($\varphi_k$) univoque dans une plage angulaire illimitée de 0 à 360° en utilisant la direction et le signe du champ magnétique du composant magnétique rotatif (12), l'unité d'interprétation et/ou de commande (22) déterminant la direction et le signe du champ magnétique du composant magnétique rotatif (12) pour une configuration initiale en interprétant des premières impulsions de test ($U_a$, $U_b$, $U_c$), lesquelles sont appliquées au mécanisme d'entraînement électrique (10), et des deuxièmes impulsions de test ($I_1$, $I_2$, $I_a$, $I_b$, $I_c$), lesquelles se produisent dans le mécanisme d'entraînement électrique (10) en réaction aux premières impulsions de test ($U_a$, $U_b$, $U_c$) appliquées, et l'unité d'interprétation et/ou de commande (22) interprétant les deuxièmes impulsions de test ($I_1$, $I_2$, $I_a$, $I_b$, $I_c$) résultantes, qui peuvent être générées en réaction aux premières impulsions de test ($U_a$, $U_b$, $U_c$) qui sont appliquées au mécanisme d'entraînement électrique (10) à deux instants d'excitation successifs ($t_k$, $t_{k+1}$), en vue de déterminer une longueur résultante d'une première impulsion de courant totale ($I_1$) en référence à un premier instant d'excitation ($t_k$) et une longueur résultante d'une deuxième impulsion de courant totale ($I_2$) en référence à un deuxième instant d'excitation ($t_{k+1}$), l'unité d'interprétation et/ou de commande (22) convertissant la valeur mesurée actuelle de l'angle ($\varphi_{AMR,k}$), mesurée de manière univoque pour la plage angulaire limitée, en une position angulaire actuelle ($\varphi_k$) univoque dans la plage angulaire illimitée en utilisant la longueur de la première impulsion de courant totale ($I_1$) et la longueur de la deuxième impulsion de courant totale ($I_2$) à partir desquelles peuvent être déterminés la direction et le signe du champ magnétique du composant magnétique rotatif (12).

7. Dispositif selon la revendication 6, **caractérisé en ce que** l'unité d'interprétation et/ou de commande (22) génère elle-même les premières impulsions de test en fonction d'informations prédéfinies (U, $t_{Puls}$, cos($\varphi_{AMR,k}$-120°), cos($\varphi_{AMR,k}$-240°), cos($\varphi_{AMR,k}$-180°), cos ($\varphi_{AMR,k}$-120°-180°), cos($\varphi_{AMR,k}$-240°-180°)) sous la forme d'impulsions de tension ($U_a$, $U_b$, $U_c$) ayant la valeur de tension (U) prédéfinie et des directions prédéfinies (cos($\varphi_{AMR,k}$-120°), cos($\varphi_{AMR,k}$-240°), cos($\varphi_{AMR,k}$-180°), cos($\varphi_{AMR,k}$-120°-180°), cos($\varphi_{AMR,k}$-240°-180°)) correspondantes et les applique à des instants d'excitation ($t_k$, $t_{k+1}$) prédéfinis pendant une durée donnée ($t_{Puls}$) par le biais d'au moins une unité d'interface (22.4) directement au mécanisme d'entraînement électrique (10), ou applique les informations prédéfinies (U, $t_{Puls}$, cos ($\varphi_{AMR,k}$-120°), cos($\varphi_{AMR,k}$-240°), cos($\varphi_{AMR,k}$-180°), cos($\varphi_{AMR,k}$-120°-180°), cos($\varphi_{AMR,k}$-240°-180°)), en vue de générer les premières impulsions de test ($U_a$, $U_b$, $U_c$) par le biais d'au moins une unité d'interface (22.4), à un générateur de tension (24) qui génère les premières impulsions de test ($U_a$, $U_b$, $U_c$) en réaction aux informations prédéfinies (U, $t_{Puls}$, cos ($\varphi_{AMR,k}$-120°), cos ($\varphi_{AMR,k}$-240°), cos($\varphi_{AMR,k}$-180°), cos($\varphi_{AMR,k}$-120°-180°), cos($\varphi_{AMR,k}$-

240°-180°)) et les applique au mécanisme d'entraînement électrique (10) aux instants d'excitation ($t_k$, $t_{k+1}$) prédéfinis pendant la durée donnée ($t_{Puls}$).

8. Dispositif selon la revendication 6 ou 7, **caractérisé en ce que** l'unité d'interprétation et/ou de commande (22) reçoit directement du mécanisme d'entraînement électrique (10) et/ou d'un dispositif de mesure du courant (26), à des instants de mesure ($t_1$, $t_2$) prédéfinis, des deuxièmes impulsions de test résultantes sous la forme d'impulsions de courant ($I_1$, $I_2$, $I_a$, $I_b$, $I_c$) par le biais d'au moins une unité d'interface (22.4), puis les interprète.

## Fig. 1

20

$U, t_{Plus}, \cos(\varphi_{AMR,k}), \cos(\varphi_{AMR,k}\text{-}120°),$
$\cos(\varphi_{AMR,k}\text{-}240°), \cos(\varphi_{AMR,k}\text{-}180°),$
$\cos(\varphi_{AMR,k}\text{-}120°\text{-}180°), \cos(\varphi_{AMR,k}\text{-}240°\text{-}180°),$

22

22.6

22.4

24

$U_a$ $U_b$ $U_c$

26

22.4

22.2

$I_1, I_2$

$I_a$

$I_b$

$I_c$

22.4

10

28

$\varphi_{AMR,k}$

## Fig. 2

12

14

14.2

14.1

$\beta$

q

N

d

$\varphi$

$\alpha$

S

# Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10248060 A1
- DE 102006004166 A1
- AT 397727 B
- WO 9110281 A
- US 2007032970 A1